# NEUE EUROPÄISCHE PATENTSCHRIFT

(11) **EP 2 197 612 B2**
(45) Veröffentlichungstag und Bekanntmachung des Hinweises auf die Entscheidung über den Einspruch: **12.02.2020**
(45) Hinweis auf die Patenterteilung: 08.02.2012
(21) Anmeldenummer: 08786180.3
(22) Anmeldetag: 16.07.2008
(51) Int. Cl.: B23B 51/02, B23C 5/10

(54) **BOHRWERKZEUG MIT BOHRKRONE**
DRILLING TOOL WITH DRILL BIT
OUTIL DE PERÇAGE AVEC COURONNE DE PERÇAGE

(30) Priorität: 14.09.2007 DE 102007044095
(43) Veröffentlichungstag der Anmeldung: 23.06.2010
(73) Patentinhaber: Komet Group GmbH, 74354 Besigheim (DE); Hartmetall-Werkzeugfabrik Paul Horn GmbH, 72072 Tübingen (DE)
(72) Erfinder: KRETZSCHMANN, Uwe, 21483 Wangelau (DE); SCHNEIDER, Rico, 74385 Pleidelsheim (DE); SCHÜTT, Henry, 74343 Sachsenheim (DE); LUIK, Matthias, 72766 Reutlingen (DE); OETTLE, Matthias, 72585 Riederich (DE)
(74) Vertreter: Wolf, Eckhard
(86) Internationale Anmeldenummer: PCT/EP2008/059286
(87) Internationale Veröffentlichungsnummer: WO 2009/037020

(56) Entgegenhaltungen:
- EP-A- 0 813 459
- EP-A- 1 306 153
- WO-A-98/10881
- WO-A-03/070408
- WO-A-2008/014367
- US-A- 4 443 136
- US-A- 5 957 631
- US-A1- 2002 168 239

## Beschreibung

Die Erfindung betrifft ein Bohrwerkzeug gemäß dem Oberbegriff der Ansprüche 1, 6 mit einem eine zentrale Drehachse aufweisenden Grundkörper und einer mit dem Grundkörper lösbar verbundenen Bohrkrone, wobei die Bohrkrone ein mit einer stirnseitigen Kupplungsaufnahme des Grundkörpers kuppelbares Kupplungsteil aufweist, das mindestens zwei über den Umfang verteilt angeordnete, konvex gekrümmte Zentrierabschnitte aufweist, die in hierzu komplementäre, konkav gekrümmte Zentrierabschnitte der Kupplungsaufnahme passgenau eingreifen, und wobei das Kupplungsteil mindestens einen mit einem Drehmitnehmer der Kupplungsaufnahme kämmenden komplementären Mitnehmeranschlag aufweist.

Es ist ein Bohrwerkzeug bekannt (EP 0 813 459 B1), bei welchem die Kupplung zwischen dem Grundkörper und dem Kupplungsteil mit Hilfe einer Spannschraube erfolgt, die durch eine Gewindebohrung im Grundkörper hindurchgreift und mit ihrer Kegelspitze in eine exzentrische Konussenkung der Bohrkrone eingreift. Die Konussenkung im Grundkörper und die Kegelspitze der Spannschraube sorgen dafür, dass zwischen dem Grundkörper und der Bohrkrone eine Planflächenverspannung erfolgt. Die Verwendung zusätzlicher Spannmittel erschwert die Handhabung des bekannten Bohrwerkzeugs beim Bohrkronenwechsel. Auch die Herstellung der einzelnen Bauteile ist relativ kompliziert und führt zu einer Materialschwächung im Bereich der Trennstelle.

Ein Bohrwerkzeug gemäß dem Oberbegriff der Ansprüche 1, 6 ist aus WO 03/070408 A1 bekannt. Ausgehend hiervon, liegt der Erfindung die Aufgabe zugrunde, ein alternatives Bohrwerkzeug der eingangs angegebenen Art zu entwickeln, dessen Handhabung beim Bohrkronenwechsel relativ einfach ist und das trotz kleiner Baugröße seiner Bauteile eine hohe Formstabilität und Wiederholgenauigkeit aufweist.

Zur Lösung dieser Aufgabe wird die im Patentanspruch 1 oder in Patentanspruch 6 angegebene Merkmalskombination vorgeschlagen. Vorteilhafte Ausgestaltungen und Weiterbildungen der Erfindung ergeben sich aus den abhängigen Ansprüchen.

Die erfindungsgemäßen Lösungen gehen auch von dem Gedanken aus, dass eine besonders einfache Auswechselbarkeit der Bohrkrone bei hoher Wechselgenauigkeit dadurch erzielt werden kann, dass zwischen der Bohrkrone und dem Grundkörper ein stabiler Form- und Kraftschluss erzielt wird, der die Verwendung zusätzlicher Spannmittel entbehrlich macht. Um dies zu erreichen, wird vorgeschlagen, dass die Zentrierabschnitte des Kupplungsteils und/oder der Kupplungsaufnahme bis zum Anschlagen des Drehanschlags gegen den Drehmitnehmer entgegen einer vorgegebenen Arbeitsdrehrichtung aufeinander drehkeilartig auflaufende Spannflächen aufweisen. Der angestrebte Kraftschluss wird dadurch erreicht, dass jeweils zumindest einer der einander zugewandten Zentrierabschnitte elastisch verformbar oder verbiegbar ist.

Im Folgenden wird die Erfindung anhand der Zeichnung näher erläutert. Es zeigen:
- Fig. 1a und b: eine Seitenansicht und eine Draufsicht eines Bohrwerkzeugs mit Bohrkrone;
- Fig. 1c: einen vergrößerten Ausschnitt des Bohrwerkzeugs nach Fig. 1 a;
- Fig. 2a und b: zwei Seitenansichten der Bohrkrone des Bohrwerkzeugs in verschiedenen Drehstellungen;
- Fig. 3a und b: eine weitere Seitenansicht und eine Draufsicht der Bohrkrone zur Veranschaulichung der Schlüsselaufnahmen;
- Fig. 4: eine schaubildliche Darstellung der Kupplungsaufnahme am Grundkörper;
- Fig. 5a und b: eine Seitenansicht und eine Draufsicht des Grundkörpers;
- Fig. 5c: einen Schnitt entlang der Schnittlinie C - C der Fig. 5b in vergrößerter Darstellung;
- Fig. 6a und b: eine Seitenansicht und eine Untenansicht einer Bohrkrone mit Maßangaben;
- Fig. 7a bis d: Draufsichten auf das Bohrwerkzeug mit verschiedenen Drehlagen der Bohrkrone gegenüber dem Grundkörper zur Veranschaulichung des Eindrehens der Bohrkrone in den Grundkörper;
- Fig. 8: ein Schema der ineinander greifenden, im Umriss teilkreisförmigen Spannflächen des Kupplungsteils und der Kupplungsaufnahme zur Erläuterung der Anordnung und Wirkung der exzentrischen Spannabschnitte des Kupplungsteils.

Die in der Zeichnung dargestellten Bohrwerkzeuge sind an einer Trennstelle 30 zweigeteilt und bestehen aus einem einen Bohrerschaft 14 tragenden Grundkörper 32 und einer eine Bohrerspitze 10 aufweisenden Bohrkrone 34. Die Bohrkrone 34 und der Grundkörper 32 sind an der Trennstelle 30 form- und kraftschlüssig miteinander verbindbar. Während der Grundkörper 32 vorzugsweise aus Werkzeugstahl oder aus einem Schnellarbeitsstahl besteht, ist die Bohrkrone 34 als Formteil aus einem Schneidstoff aus der Gruppe Hartmetall oder Keramik gebildet, das als gesintertes Pulverspritzgussteil oder -pressteil hergestellt und gesintert wird. Grundsätzlich ist es auch möglich, die Bohrkrone 34 aus einem verschleißfest beschichteten Werkzeugstahl herzustellen.

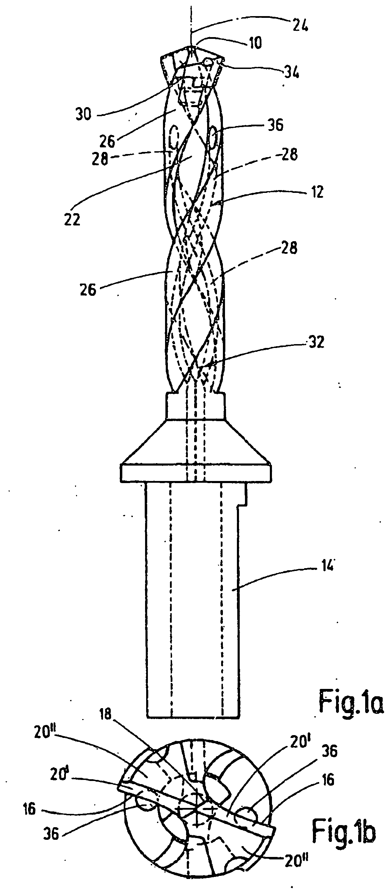

Das in Fig. 1a bis c dargestellte Bohrwerkzeug weist eine Bohrerspitze 10, einen an die Bohrerspitze anschließenden Spanabfuhrteil 12 und einen rückwärtig am Spanabfuhrteil 12 angeformten Bohrerschaft 14 auf. Die Bohrerspitze 10 enthält zwei Hauptschneiden 16 und, eine die Hauptschneiden 16 spitzenseitig miteinander verbindende Querschneide 18 sowie an die Hauptschneiden 16 und die Querschneide 18 anschließende Hauptfreiflächen 20' und Nebenfreiflächen 20". Von den Hauptschneiden 16 aus erstrecken sich über den Spanabfuhrteil 12 zwei wendelförmige Spanfördernuten 22, die auf der Seite des Grundkörpers bis zum Bohrerschaft 14 reichen. Die Trennstelle 30 befindet sich zwischen den Spanfördernuten 22 im Bereich des Spanabfuhrteils 12. Die Spanfördernuten 22 sind an ihren Flanken durch Rippen 26 begrenzt, in denen je ein Kühlmittelkanal 28 angeordnet ist. Die Kühlmittelkanäle 28 sind mit der gleichen Steigung wie die Rippen 26 gewendelt und gehen zur Bohrkronenseite hin in einen geradlinigen Kanalabschnitt 28' über. Die Kanalabschnitte 28' werden dort von den gewendelten Spanfördernuten 22 unter Bildung einer ovalen, in die Spanfördernut weisenden Austrittsöffnung 36 angeschnitten. Die Austrittsöffnungen sind so positioniert, dass sie auf die zugehörigen Hauptschneiden 16 der Bohrkrone 34 gerichtet sind. Die Austrittsöffnungen 36 können in eine nicht dargestellte entlang der zugehörigen Spanfördernut 22 verlaufende randoffene Rinne münden. Letztere kann in jeweils eine in der Bohrkrone 34 angeordnete, zu einer der Hauptschneiden 16 führende, nicht dargestellte Rinne übergehen.

Die radial über den Außenumfang der Bohrkrone 34 überstehenden Schneidkantenecken 84 gehen in eine Führungskante 86 über, an die in Umfangsrichtung eine sich über einen Teilumfang der Bohrkrone erstreckende, radial über den Außenumfang überstehende Führungsrippe 88 angrenzt.

Die in Spanablaufrichtung unmittelbar hinter den Hauptschneiden 16 beginnenden Spanfördernuten 22 sind auf der Seite der Schneiden durch je eine Spanfläche 90 begrenzt.

An ihrer den Haupt- und Nebenfreiflächen 20',20" gegenüberliegenden Seite ist die Bohrkrone 34 mit einem Kupplungsteil 96 versehen, das unter Bildung der Trennstelle 30 mit einer stirnseitig am Grundkörper 32 angeordneten Kupplungsaufnahme 94 kuppelbar ist. Das Kupplungsteil 96 weist zu diesem Zweck zwei über den Umfang verteilt angeordnete, konvex gekrümmte Zentrierabschnitte 40 auf, die in hierzu komplementäre, konkav gekrümmte Zentrierabschnitte 42 der Kupplungsaufnahme 94 eingreifen. Weiter weist das Kupplungsteil 96 einen mit einem Drehmitnehmer 44 der Kupplungsaufnahme 94 kämmenden komplementären Mitnehmeranschlag 46 auf.

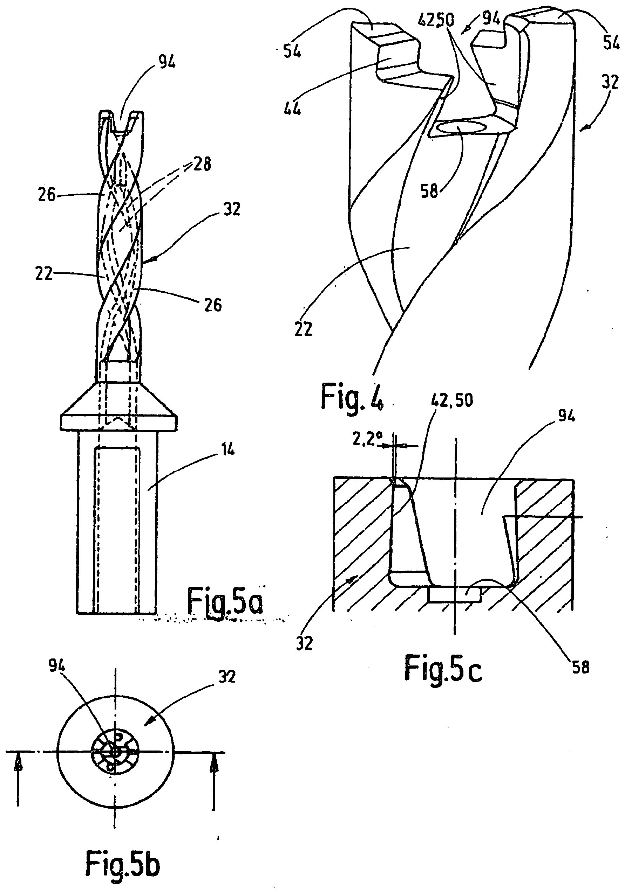

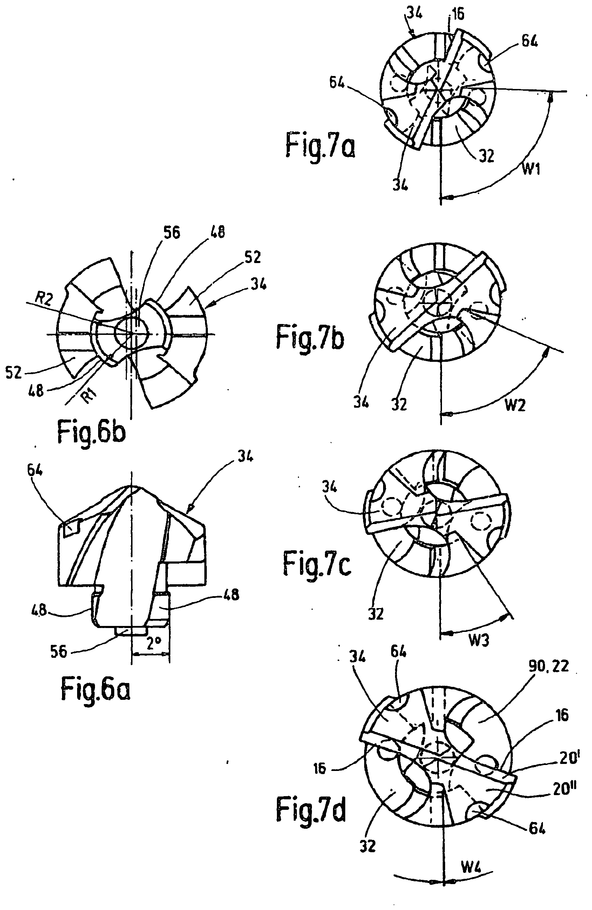

Eine Besonderheit der Erfindung besteht darin, dass die Zentrierabschnitte 40,42 des Kupplungsteils 96 und der Kupplungsaufnahme 94 bis zum Anschlagen des Mitnehmeranschlags 46 entgegen einer durch die Schneidrichtung der Hauptschneiden 16 bestimmten Arbeitsdrehrichtung um die Drehachse 24 auf einander drehkeilartig auflaufende Spannflächen 48,50 aufweisen. Die Spannflächen 48,50 des Kupplungsteils 96 weisen zu diesem Zweck einander diametral gegenüberliegende, zueinander exzentrische Kreisabschnitte auf (vgl. Fig. 6b sowie Fig. 7a bis d), die einen bezüglich der Drehachse 24 entgegen der vorgegebenen Arbeitsdrehrichtung abnehmenden Radius aufweisen. Wenn dazuhin zumindest eine der einander zugewandten Spannflächen unter Bildung eines Kraftschlusses elastisch verform- oder verbiegbar ist, kommt es zu der genannten drehkeilartigen Verspannung. Hinzu kommt, dass die Spannflächen 48,50 einander zugewandte, sich zu einem Konus mit zur vorgegebenen Drehachse 24 konzentrischer Konusachse ergänzende Konusflächen 42,44 bilden (vgl. Fig. 6a und Fig.4), deren Konuswinkel in Spannrichtung divergieren und bei dem gezeigten Ausführungsbeispiel auf der Seite der Bohrkrone 34 2° und auf der Seite des Grundkörpers 32 2,2° beträgt. Die Bohrkrone 34 und der Grundkörper 32 weisen außerdem einander zugewandte Planflächenabschnitte 52,54 auf, die im Wesentlichen senkrecht zur Drehachse 24 ausgerichtet sind und die in der Kupplungsstellung unter der Einwirkung der konischen Spannflächen 48,50 paarweise gegeneinander gepresst werden.

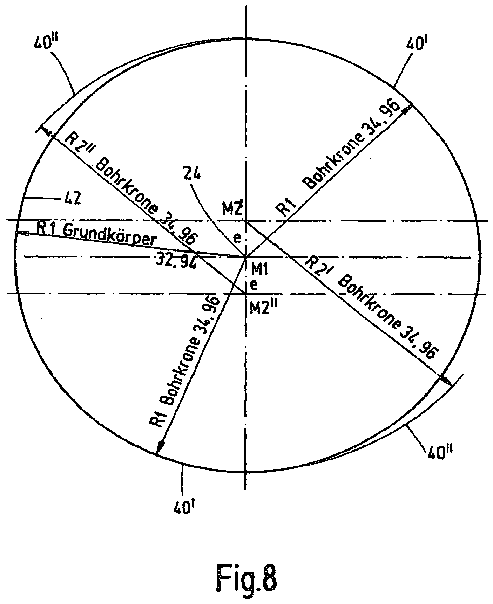

Wie aus Fig. 7a bis d zu ersehen ist, werden die Bohrkrone und der Grundkörper mit ihrem Kupplungsteil 96 und der Kupplungsaufnahme 94 bajonettverschlussartig miteinander verbunden. Zur Vorzentrierung weist die Bohrkrone 34 einen am freien Ende ihres Kupplungsteils 96 überstehenden zylindrischen Zentrierzapfen 56 auf, der in eine komplementäre Zentrieröffnung 58 am Boden der Kupplungsaufnahme 94 eingreift. Beim Weiterdrehen von der Winkelstellung W1 über W2, W3 in die Winkelstellung W4 greift zunächst das Kupplungsteil 96 mit dem Radiusteil R1 der Zentrierabschnitte 42 in die komplementären Zentrierabschnitte 40 der Kupplungsaufnahme 94 ein und gleitet allmählich mit den konischen Spannflächen 50 auf den Spannflächen 48 der Zentrierabschnitte 40 auf, bis in der Stellung der Fig. 7d der Winkel W4 = 0 erreicht ist und der Mitnehmeranschlag 46 der Bohrkrone 34 gegen den Drehmitnehmer 44 der Kupplungsaufnahme anschlägt. Bei dieser Drehung werden die in Fig. 6b und 8 erkennbaren Exzenterbewegungen wirksam, die zu einer Verspannung des Kupplungsteils 96 und der Kupplungsaufnahme 44 an ihren Spannflächen 48,50 führen.

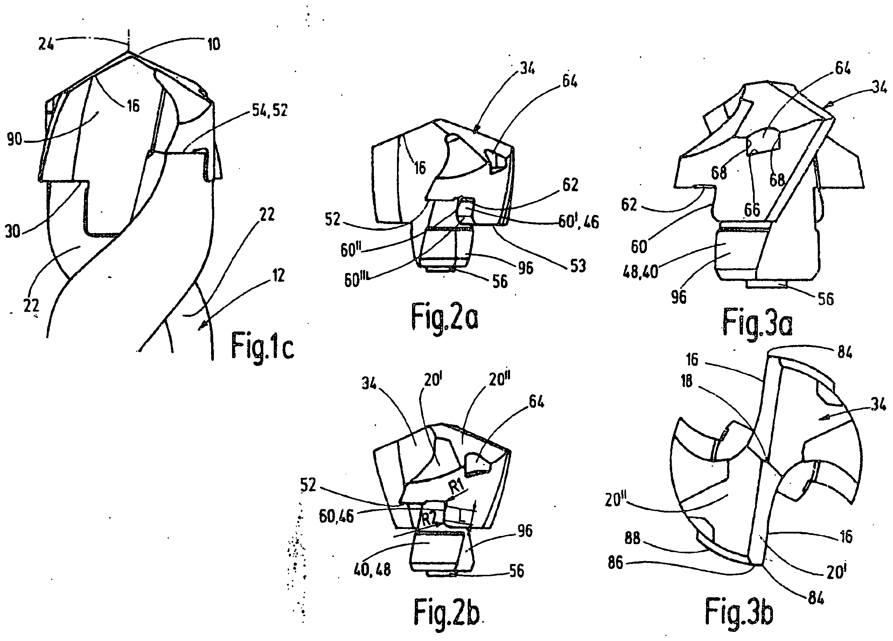

Zur Erläuterung der bei der Montage auftretenden Exzenterbewegungen zwischen dem Kupplungsteil 96 und der Kupplungsaufnahme 44 sind in dem Schema der Fig. 8 die teilkreisfömnigen Umrisslinien der Spannflächen 48,50 mit den zugehörigen Mittelpunkten und Radien angegeben. Hieraus ist ersichtlich, dass die konkav gekrümmten Zentrierabschnitte 42 der Kupplungsaufnahme 94 im Querschnitt zur Drehachse konzentrische Teilkreise mit einem vorgegebenen Radius R1 bilden und dass die konvexen Zentrierabschnitte 40 des Kupplungsteils 96 jeweils aus einem zur Drehachse 24 konzentrischen Führungsabschnitt 40' und mit einem dem aufnahmeseitigen Radius R1 entsprechenden Radius R1' und einen sich daran tangential anschließenden, zur Drehachse 24 mit vorgegebener Exzentrizität e exzentrischen teilkreisförmigen Spannabschnitt 40" mit einem größeren Radius R2',R2" = R1+e aufweisen, wobei die exzentrischen Spannabschnitte 40" des Kupplungsteils 96 und die teilkreisförmigen Zentrierabschnitte 42 der Kupplungsaufnahme 94 in ihrer Spannstellung kraftschlüssig gegeneinander anliegen. Die Radien R1 sind dabei auf den in der Drehachse liegenden Mittelpunkt und die Radien R2' bzw. R2" auf die hierzu exzentrischen Mittelpunkte M2' und M2" bezogen. Das Kupplungsteil 96 und die Kupplungsaufnahme 94 werden beim Kupplungsvorgang an der Trennstelle bajonettverschlussartig gegeneinander verdreht. Zugleich kommt es aufgrund der Konizität der Zentrierabschnitte 42,40 zu einer zität der Zentrierabschnitte 42,40 zu einer Planflächenverspannung an den Planflächenabschnitten 54,52 (Fig. 1c).

Wie insbesondere aus Fig. 2a und b in Verbindung mit Fig. 4 zu ersehen ist, kommt es auch im Bereich des Drehmitnehmers 44 und des Mitnehmeranschlags 46 aufgrund der Anschlagschräge 60 zu einem Formschluss. Der Anstellwinkel der Anschlagschräge 60 beträgt in dem gezeigten Ausführungsbeispiel etwa 11°. Aus Fig. 2a und b ist ferner erkennbar, dass die Anschlagschräge 60 der Bohrkrone eine ebene oder ballige Flächenpartie 60' bildet, die durch zwei einander gegenüberliegende Randpartien 60",60"' begrenzt ist, von denen eine (60") konkav und die andere (60"') konvex gekrümmt ist. Die Randpartien gehen unter Einschluss eines spitzen Winkels unmittelbar oder mittelbar über eine Freisparung 62 in jeweils einen zur Drehachse 24 der Bohrkrone 34 senkrechten Planflächenabschnitt 52,53 über. Aus Toleranzgründen dient entweder der Planflächenabschnitt 52 oder der Planflächenabschnitt 53 zusammen mit dem komplementären Planflächenabschnitt 54 des Grundkörpers zur Planflächenverspannung. Die spitzen Winkel (79°) der Randpartien 60",60"' sind im Wesentlichen gleich groß und entsprechen einem durch den Anstellwinkel (11°) der Anschlagschräge 60 verminderten rechten Winkel (90°). Mit diesen Maßnahmen wird erreicht, dass an den Anschlagstellen keine Kerbwirkung an der Bohrkrone 34 auftritt, die beim Spannvorgang zu einem Materialbruch führen könnte.

Um das Ein- und Ausspannen der Bohrkrone 34 am Grundkörper 32 zu erleichtern, sind im Bereich der Nebenfreiflächen 20" der Bohrkrone zwei in Umfangsrichtung einen Winkelabstand von etwa 180° voneinander aufweisende Schlüsseleingriffe 64 angeordnet, die sowohl in axialer als auch in radialer Richtung randoffen sind. Die Schlüsseleingriffe 64 haben im Wesentlichen parallel zur Drehachse 24 ausgerichtete, durch einen Eingriffsboden 66 begrenzte Schlüsselanschlagsflächen 68, die in Schließ- und Öffnungsrichtung etwa gleich hoch sind (vgl. Fig. 3a). Die Eingriffsböden 66 der Schlüsseleingriffe 64 sind demgemäß schräg zu einer zur Drehachse 24 senkrechten Umfangsebene ausgerichtet (vgl. Fig. 2a, b, Fig. 3a). Dementsprechend sind die Eingriffsböden zumindest in Umfangsrichtung etwa parallel zur zugehörigen Nebenfreifläche 20" ausgerichtet (vgl. Fig. 3a).

## Patentansprüche

1. Bohrwerkzeug mit einem eine zentrale Drehachse (24) aufweisenden Grundkörper (32) und einer mit dem Grundkörper (32) lösbar verbundenen Bohrkrone (34), wobei die Bohrkrone (34) ein mit einer stirnseitigen Kupplungsaufnahme (94) des Grundkörpers (32) kuppelbares Kupplungsteil (96) aufweist, das mindestens zwei über den Umfang verteilt angeordnete, konvex gekrümmte Zentrierabschnitte (40) aufweist, die in hierzu komplementäre, konkav gekrümmte Zentrierabschnitte (42) der Kupplungsaufnahme (94) passgenau eingreifen, wobei das Kupplungsteil (96) mindestens einen mit einem Drehmitnehmer (44) der Kupplungsaufnahme (94) kämmenden komplementären Mitnehmeranschlag (46) aufweist, und wobei die Zentrierabschnitte (40,42) des Kupplungsteils (96) und/oder der Kupplungsaufnahme (94) bis zum gegenseitigen Anschlag des Mitnehmeranschlags (46) und des Drehmitnehmers (44) entgegen einer vorgegebenen Arbeitsdrehrichtung aufeinander drehkeilartig auflaufende Spannflächen (48,50) aufweisen, **dadurch gekennzeichnet, dass** die Spannflächen (48,50) des Kupplungsteils (96) in ihrem Umriss einander diametral gegenüberliegende bezuglich der Drehachse (24) exzentrische Kreisabschnitte (40") aufweisen, dass die konkaven Zentrierabschnitte (42) der Kupplungsaufnahme (94) im Querschnitt zur Drehachse konzentrische Teilkreise mit einem vorgegebenen Radius (R1) bilden, und dass die konvexen Zentrierabschnitte (40) des Kupplungsteils (96) einen zur Drehachse konzentrischen teilkreisförmigen Führungsabschnitt (40') mit einem dem aufnahmeseitigen Radius (R1) entsprechenden Radius (R1) und einen sich daran tangential anschließenden, zur Drehachse exzentrischen teilkreisförmigen Spannabschnitt (40") mit einem gegenüber dem aufnahmeseitigen Radius (R1) größeren Radius (R2',R2") aufweisen, wobei die exzentrischen Spannabschnitte (40") des Kupplungsteils (96) und die teilkreisförmigen Zentrierabschnitte (42) der Kupplungsaufnahme (94) in ihrer Spannstellung kraftschlüssig gegeneinander anliegen.

2. Bohrwerkzeug nach Anspruch 1, **dadurch gekennzeichnet, dass** zumindest jeweils einer der einander zugewandten Zentrierabschnitte (40,42) zumindest abschnittsweise unter Bildung eines Kraftschlusses elastisch verformbar oder verbiegbar ist.

3. Bohrwerkzeug nach Anspruch 1 oder 2, **dadurch gekennzeichnet, dass** das Kupplungsteil (96) und die Kupplungsaufnahme (94) an ihrer Trennstelle (30) bajonettverschlussartig gegeneinander verdrehbar sind.

4. Bohrwerkzeug nach einem der Ansprüche 1 bis 3, **dadurch gekennzeichnet, dass** die Spannflächen (48,50) einander paarweise zugewandte, sich zu einem Konus mit zur Drehachse (24) konzentrischer Konusachse ergänzende Konusflächen bilden und dass das Kupplungsteil (96) und die Kupplungsaufnahme (94) einander zugewandte, in der Kupplungsstellung unter der Einwirkung der konischen Spannflächen (48,50) gegeneinander gepresste, im Wesentlichen senkrecht zur Drehachse ausgerichtete Planflächenabschnitte (52,54) aufweisen.

5. Bohrwerkzeug nach Anspruch 4, **dadurch gekennzeichnet, dass** der Konuswinkel 1 bis 8° beträgt, wobei der kupplungsteilseitige Konuswinkel steiler als der kupplungsaufnahmeseitige Konuswinkel ist.

6. Bohrwerkzeug mit einem eine zentrale Drehachse (24) aufweisenden Grundkörper (32) und einer mit dem Grundkörper (32) lösbar verbundenen Bohrkrone (34), wobei die Bohrkrone (34) ein mit einer stirnseitigen Kupplungsaufnahme (94) des Grundkörpers (32) kuppelbares Kupplungsteil (96) aufweist, das mindestens zwei über den Umfang verteilt angeordnete, konvex gekrümmte Zentrierabschnitte (40) aufweist, die in hierzu komplementäre, konkav gekrümmte Zentrierabschnitte (42) der Kupplungsaufnahme (94) passgenau eingreifen, wobei das Kupplungsteil (96) mindestens einen mit einem Drehmitnehmer (44) der Kupplungsaufnahme (94) kämmenden komplementären Mitnehmeranschlag (46) aufweist, und wobei die Zentrierabschnitte (40,42) des Kupplungsteils (96) und/oder der Kupplungsaufnahme (94) bis zum gegenseitigen Anschlag des Mitnehmeranschlags (46) und des Drehmitnehmers (44) entgegen einer vorgegebenen Arbeitsdrehrichtung aufeinander drehkeilartig auflaufende Spannflächen (48,50) aufweisen, wobei die Spannflächen (48,50) einander paarweise zugewandte, sich zu einem Konus mit zur Drehachse (24) konzentrischer Konusachse ergänzende Konusflächen bilden und dass das Kupplungsteil (96) und die Kupplungsaufnahme (94) einander zugewandte, in der Kupplungsstellung unter der Einwirkung der konischen Spannflächen (48,50) gegeneinander gepresste, im Wesentlichen senkrecht zur Drehachse ausgerichtete Planflächenabschnitte (52,54) aufweisen, **dadurch gekennzeichnet, dass** die Spannflächen (48,50) des Kupplungsteils (96) in ihrem Umriss einander diametral gegenüberliegende, bezuglich der Drehachse (24) exzentrische Kreisabschnitte (40',40") aufweisen, und dass der Konuswinkel 1 bis 8° beträgt, wobei der kupplungsteilseitige Konuswinkel steiler als der kupplungsaufnahmeseitige Konuswinkel ist.

7. Bohrwerkzeug nach einem der Ansprüche 4 bis 6, **dadurch gekennzeichnet, dass** die konischen Spannflächen (48,50) in der Spannstellung einen Formschluss zwischen der Kupplungsaufnahme (94) und dem Kupplungsteil (96) bilden.

8. Bohrwerkzeug nach einem der Ansprüche 1 bis 7, **dadurch gekennzeichnet, dass** die Mitnehmeranschläge (46) und die Drehmitnehmer (44) paarweise eine im Kupplungszustand einen Formschluss zwischen dem Grundkörper und der Bohrkrone bildende Anschlagschräge (60) aufweisen.

9. Bohrwerkzeug nach Anspruch 8, **dadurch gekennzeichnet, dass** die Anschlagschräge des Mitnehmeranschlags (46) der Bohrkrone (34) eine ebene oder ballige Flächenpartie (60') bildet, die durch zwei einander gegenüberliegende Randpartien (60", 60"') begrenzt ist, von denen eine konkav und die andere konvex gekrümmt ist, und die unter Einschluss eines spitzen Winkels unmittelbar oder mittelbar über eine Freisparung (62) in jeweils einen zur Drehachse (24) der Bohrkrone (34) senkrechten Planflächenabschnitt (52,53) übergehen, wobei die spitzen Winkel der Randpartien (60",60"') im Wesentlichen gleich groß sind und einem durch den Anstellwinkel der Anschlagschräge (60) verminderten rechten Winkel entsprechen.

10. Bohrwerkzeug nach einem der Ansprüche 1 bis 9, **dadurch gekennzeichnet, dass** das Kupplungsteil (96) und die Kupplungsaufnahme (94) einen vorzugsweise zylindrischen, konischen oder balligen Zentrierzapfen (56) und eine hierzu komplementäre Zentrierausnehmung (58) als Vorzentrierungsmittel aufweisen.

11. Bohrwerkzeug nach einem der Ansprüche 1 bis 10, **dadurch gekennzeichnet, dass** im Bereich der Freiflächen oder Nebenfreiflächen (20', 20") der Bohrkrone (34) mindestens zwei in Umfangsrichtung einen Winkelabstand voneinander aufweisende randoffene Schlüsseleingriffe (64) angeordnet sind.

12. Bohrwerkzeug nach Anspruche 11, **dadurch gekennzeichnet, dass** die Schlüsseleingriffe (64) eine axiale und/oder eine radiale Randöffnung aufweisen.

13. Bohrwerkzeug nach Anspruch 11 oder 12, **dadurch gekennzeichnet, dass** die Schlüsseleingriffe (64) im Wesentlichen parallel zur Drehachse (24) ausgerichtete, durch einen Eingriffsboden (66) begrenzte Schlüsselanschlagsflächen (68) aufweisen.

14. Bohrwerkzeug nach einem der Ansprüche 1 bis 13, **dadurch gekennzeichnet, dass** der Grundkörper (32) zumindest zwei an ihren Flanken durch Rippen (26) begrenzte Spanfördernuten (22) aufweist, dass in den Rippen (26) des Grundkörpers (32) je ein Kühlmittelkanal angeordnet ist, der am bohrkronenseitigen Ende des Grundkörpers eine innerhalb einer der Spanfördernuten (22) angeordnete Austrittsöffnung (36) aufweist.

15. Bohrwerkzeug nach Anspruch 14, **dadurch gekennzeichnet, dass** die Austrittsöffnungen (36) eine entlang den Spanfördernuten (22) verlaufende randoffene Rinne bilden oder in eine solche münden, wobei die Rinne in jeweils eine in der Bohrkrone (34) angeordnete, zu einer der Hauptschneiden (16) führende Rinne übergehen.

## Claims

1. A drilling tool with a basic body (32) having a central axis of rotation (24) and with a drill bit (34) connected releasably to the basic body (32), the drill bit (34) having a coupling part (96) which is couplable to an end-face coupling receptacle (94) of the basic body (32) and which has at least two convexly curved centering portions (40) which are arranged so as to be distributed over the circumference and which engage with an exact fit into concavely curved centering portions (42), complementary to said convexly curved centering portions, of the coupling receptacle (94), the coupling part (96) having at least one complementary driver stop (46) meshing with a rotary driver (44) of the coupling receptacle (94), and the centering portions (40, 42) of the coupling part (96) and/or of the coupling receptacle (94) having, up to the mutual abutment of the driver stop (46) and of the rotary driver (44), tension faces (48, 50) running toward one another in the manner of a rotary wedge opposite to a predetermined working direction of rotation, **characterized in that** the tension faces (48, 50) of the coupling part (96) have in outline circle segments (40") which lie diametrically opposite one another and are eccentric with respect to the axis of rotation (24) and that the concave centering portions (42) of the coupling receptacle (94) form in cross section part circles concentric with respect to the axis of rotation and having a predetermined radius (R1), and **in that** the convex centering portions (40) of the coupling part (96) have a part-circular guide portion (40') concentric with respect to the axis of rotation, with a radius (R1) corresponding to the receptacle-side radius (R1), and a part-circular tension portion (40") tangentially adjoining said guide portion and eccentric with respect to the axis of rotation, with a radius (R2', R2") larger than the receptacle-side radius (R1), the eccentric tension portions (40") of the coupling part (96) and the part-circular centering portions (42) of the coupling receptacle (94) bearing non-positively one against the other in their tension position.

2. The drilling tool as claimed in claim 1, **characterized in that** in each case at least one of the centering portions (40, 42) facing one another is at least partially elastically deformable or bendable so as to form a non-positive connection.

3. The drilling tool as claimed in claim 1 or 2, **characterized in that** the coupling part (96) and the coupling receptacle (94) are rotatable with respect to one another in the manner of a bayonet fastening at their separation point (30).

4. The drilling tool as claimed in one of claims 1 to 3, **characterized in that** the tension faces (48, 50) form conical faces which face one another in pairs and complete one another to form a cone with a cone axis concentric with respect to the axis of rotation (24) and that the coupling part (96) and the coupling receptacle (94) have planar face portions (52, 54) which face one another and, in the coupling position, are pressed one against the other under the action of the conical tension faces (48, 50) and are oriented essentially perpendicularly with respect to the axis of rotation.

5. The drilling tool as claimed in claim 4, **characterized in that** the cone angle is 1° to 8°, wherein the coupling-part-side cone angle is steeper than the coupling-receptacle-side cone angle.

6. A drilling tool with a basic body (32) having a central axis of rotation (24) and with a drill bit (34) connected releasably to the basic body (32), the drill bit (34) having a coupling part (96) which is couplable to an end-face coupling receptacle (94) of the basic body (32) and which has at least two convexly curved centering portions (40) which are arranged so as to be distributed over the circumference and which engage with an exact fit into concavely curved centering portions (42), complementary to said convexly curved centering portions, of the coupling receptacle (94), the coupling part (96) having at least one complementary driver stop (46) meshing with a rotary driver (44) of the coupling receptacle (94), and the centering portions (40, 42) of the coupling part (96) and/or of the coupling receptacle (94) having, up to the mutual abutment of the driver stop (46) and of the rotary driver (44), tension faces (48, 50) running toward one another in the manner of a rotary wedge opposite to a predetermined working direction of rotation, wherein the tension faces (48, 50) form conical faces which face one another in pairs and complete one another to form a cone with a cone axis concentric with respect to the axis of rotation (24) and that the coupling part (96) and the coupling receptacle (94) have planar face portions (52, 54) which face one another and, in the coupling position, are pressed one against the other under the action of the conical tension faces (48, 50) and are oriented essentially perpendicularly with respect to the axis of rotation, **characterized in that** the tension faces (48, 50) of the coupling part (96) have in outline circle segments (40', 40") which lie diametrically opposite one another and are eccentric with respect to the axis of rotation (24) and with respect to one another and that the cone angle is 1° to 8°, wherein the coupling-part-side cone angle is steeper than the coupling-receptacle-side cone angle.

7. The drilling tool as claimed in one of claim 4 to 6, **characterized in that** the conical tension faces (48, 50) form, in the tension position, a positive connection between the coupling receptacle (94) and the coupling part (96).

8. The drilling tool as claimed in one of claims 1 to 7, **characterized in that** the driver stops (46) and the rotary drivers (44) have in pairs an abutment slope (60) which in the coupling state forms a positive connection between the basic body and the drill bit.

9. The drilling tool as claimed in claim 8, **characterized in that** the abutment slope of the driver stop (46) of the drill bit (34) forms a planar or crowned face part (60') delimited by two marginal parts (60", 60"') which lie opposite one another and of which one is concavely curved and the other is convexly curved, and which, forming an acute angle, merge directly or indirectly via a relief (62), in each case into a planar face portion (52, 53) perpendicular with respect to the axis of rotation (24) of the drill bit (34), wherein the acute angles of the marginal parts (60", 60"') are substantially identical and correspond to a right angle reduced by the angle of incidence of the abutment slope (60).

10. The drilling tool as claimed in one of claims 1 to 9, **characterized in that** the coupling part (96) and the coupling receptacle (94) have a preferably cylindrical, conical or crowned centering tenon (56) and a centering recess (58), complementary to this, as a precentering means.

11. The drilling tool as claimed in one of claims 1 to 10, **characterized in that** at least two marginally open key engagement points (64) which are at an angular distance from one another in the circumferential direction are arranged in the region of the flanks or minor flanks (20', 20") of the drill bit (34).

12. The drilling tool as claimed in claim 11, **characterized in that** the key engagement points (64) have an axial or a radial marginal orifice.

13. The drilling tool as claimed in claim 11 or 12, **characterized in that** the key engagement points (64) have key abutment faces (68) which are oriented essentially parallel to the axis of rotation (24) and are delimited by an engagement bottom (66).

14. The drilling tool as claimed in one of claims 1 to 13, **characterized in that** the basic body (32) has at least two chip-conveying grooves (22) delimited on their flanks by ribs (26), and **in that** there is arranged in each of the ribs (26) of the basic body (32) a coolant duct which has, at the drill-bit-side end of the basic body, an outlet orifice (36) arranged within one of the chip-conveying grooves (22).

15. The drilling tool as claimed in claim 14, **characterized in that** the outlet orifices (36) form or issue into a marginally open channel running along the chip-conveying grooves (22), the channel merging in each case into a channel arranged in the drill bit (34) and leading to one of the major cutting edges (16).

## Revendications

1. Outil de perçage comprenant un corps de base (32) muni d'un axe médian de rotation (24), et une couronne de perçage (34) reliée audit corps de base (32) de manière libérable, ladite couronne de perçage (34) présentant une partie d'accouplement (96) pouvant être accouplée à un logement frontal d'accouplement (94) dudit corps de base (32), et pourvue d'au moins deux zones de centrage (40) à courbure convexe agencées avec répartition sur le pourtour et pénétrant, avec ajustement serré, dans des zones complémentaires de centrage (42) dudit logement d'accouplement (94), dotées d'une courbure concave, sachant que ladite partie d'accouplement (96) comporte au moins une butée complémentaire d'entraînement (46), venant en prise avec un organe d'entraînement rotatoire (44) dudit logement d'accouplement (94), et sachant que les zones de centrage (40, 42) de ladite partie d'accouplement (96) et/ou dudit logement d'accouplement (94) offrent des surfaces de serrage (48, 50) montant l'une sur l'autre à la manière d'un coin tournant, en sens inverse d'une direction préétablie de rotation de travail, jusqu'à ce que la butée d'entraînement (46) et l'organe d'entraînement rotatoire (44) viennent se plaquer l'un contre l'autre, **caractérisé par le fait que** les surfaces de serrage (48, 50) de la partie d'accouplement (96) présentent des régions circulaires (40") à profils diamétralement opposés, excentrées par rapport à l'axe de rotation (24) ; **par le fait que** les zones concaves de centrage (42) du logement d'accouplement (94) décrivent, en coupe transversale, des circonférences partielles concentriques audit axe de rotation (24) et munies d'un rayon préétabli (R1) ; et **par le fait que** les zones convexes de centrage (40) de ladite partie d'accouplement (96) comportent une région de guidage (40') de forme partiellement circulaire, concentrique audit axe de rotation et pourvue d'un rayon (R1) correspondant au rayon (R1) du côté logement, et une région de serrage (40") de forme partiellement circulaire qui se rattache tangentiellement à la région précitée, est excentrée par rapport audit axe de rotation, et présente un rayon (R2', R2") supérieur audit rayon (R1) du côté logement, les régions excentrées de serrage (40") de ladite partie d'accouplement (96), et les zones de centrage (42) partiellement circulaires dudit logement d'accouplement (94), étant mécaniquement en applique les unes contre les autres dans leur position de serrage.

2. Outil de perçage selon la revendication 1, **caractérisé par le fait qu'**au moins l'une respective des zones de centrage (40, 42), se faisant mutuellement face, peut être déformée ou cintrée élastiquement, au moins par tronçons, avec instauration d'une interaction mécanique positive.

3. Outil de perçage selon la revendication 1 ou 2, **caractérisé par le fait que** la partie d'accouplement (96) et le logement d'accouplement (94) peuvent tourner l'un vis-à-vis de l'autre dans leur zone de séparation (30), à la manière d'une fermeture à baïonnette.

4. Outil de perçage selon l'une des revendications 1 à 3, **caractérisé par le fait que** les surfaces de serrage (48, 50) constituent des surfaces tronconiques se faisant face par paires, qui se complètent pour former un cône dont l'axe est concentrique à l'axe de rotation (24) ; et **par le fait que** la partie d'accouplement (96) et le logement d'accouplement (94) comportent des zones superficielles planes (52, 54) qui se font mutuellement face, sont orientées pour l'essentiel perpendiculairement à l'axe de rotation et sont pressées les unes contre les autres, dans la position accouplée, sous l'action desdites surfaces tronconiques de serrage (48, 50).

5. Outil de perçage selon la revendication 4, **caractérisé par le fait que** l'angle de conicité mesure de 1 à 8°, l'angle de conicité situé côté partie d'accouplement étant plus raide que l'angle de conicité situé côté logement d'accouplement.

6. Outil de perçage comprenant un corps de base (32) muni d'un axe médian de rotation (24), et une couronne de perçage (34) reliée audit corps de base (32) de manière libérable, ladite couronne de perçage (34) présentant une partie d'accouplement (96) pouvant être accouplée à un logement frontal d'accouplement (94) dudit corps de base (32), et pourvue d'au moins deux zones de centrage (40) à courbure convexe agencées avec répartition sur le pourtour et pénétrant, avec ajustement serré, dans des zones complémentaires de centrage (42) dudit logement d'accouplement (94), dotées d'une courbure concave, sachant que ladite partie d'accouplement (96) comporte au moins une butée complémentaire d'entraînement (46), venant en prise avec un organe d'entraînement rotatoire (44) dudit logement d'accouplement (94), sachant que les zones de centrage (40, 42) de ladite partie d'accouplement (96) et/ou dudit logement d'accouplement (94) offrent des surfaces de serrage (48, 50) montant l'une sur l'autre à la manière d'un coin tournant, en sens inverse d'une direction préétablie de rotation de travail, jusqu'à ce que la butée d'entraînement (46) et l'organe d'entraînement rotatoire (44) viennent se plaquer l'un contre l'autre, sachant que lesdites surfaces de serrage (48, 50) constituent des surfaces tronconiques se faisant face par paires, qui se complètent pour former un cône dont l'axe est concentrique à l'axe de rotation (24), et sachant que ladite partie d'accouplement (96) et ledit logement d'accouplement (94) comportent des zones superficielles planes (52, 54) qui se font mutuellement face, sont orientées pour l'essentiel perpendiculairement à l'axe de rotation et sont pressées les unes contre les autres, dans la position accouplée, sous l'action desdites surfaces tronconiques de serrage (48, 50), **caractérisé par le fait que** les surfaces de serrage (48, 50) de la partie d'accouplement (96) présentent des régions circulaires (40', 40") à profils diamétralement opposés, excentrées par rapport à l'axe de rotation (24) ; et **par le fait que** l'angle de conicité mesure de 1 à 8°, l'angle de conicité situé côté partie d'accouplement étant plus raide que l'angle de conicité situé côté logement d'accouplement.

7. Outil de perçage selon l'une des revendications 4 à 6, **caractérisé par le fait que** les surfaces tronconiques de serrage (48, 50) instaurent, dans la position de serrage, une coopération par complémentarité de formes entre le logement d'accouplement (94) et la partie d'accouplement (96).

8. Outil de perçage selon l'une des revendications 1 à 7, **caractérisé par le fait que** les butées d'entraînement (46) et les organes d'entraînement rotatoire (44) présentent, en mode apparié, un biseau de butée (60) qui instaure, à l'état accouplé, une coopération par complémentarité de formes entre le corps de base et la couronne de perçage.

9. Outil de perçage selon la revendication 8, **caractérisé par le fait que** le biseau de butée de la butée d'entraînement (46) de la couronne de perçage (34) forme une région superficielle (60') plane ou bombée, délimitée par deux régions marginales (60", 60"') tournées à l'opposé, dont l'une présente une courbure concave et l'autre offre une courbure convexe, et qui fusionnent respectivement en décrivant un angle aigu, directement ou indirectement par l'intermédiaire d'une dépouille (62), dans une zone superficielle plane (52, 53) perpendiculaire à l'axe de rotation (24) de ladite couronne de perçage (34), les angles aigus desdites régions marginales (60", 60"') étant sensiblement égaux, et correspondant à un angle droit réduit de l'angle d'inclinaison dudit biseau de butée (60).

10. Outil de perçage selon l'une des revendications 1 à 9, **caractérisé par le fait que** la partie d'accouplement (96) et le logement d'accouplement (94) présentent, en tant que moyen de centrage préalable, un tenon de centrage (56) tronconique ou bombé, de préférence cylindrique, et un évidement de centrage (58) complémentaire dudit tenon.

11. Outil de perçage selon l'une des revendications 1 à 10, **caractérisé par le fait qu'**au moins deux configurations (64) à bords ouverts, dévolues à l'engagement d'une clé et mutuellement distantes d'un espacement angulaire, sont disposées dans la région des surfaces dépouillées ou des surfaces dépouillées auxiliaires (20', 20") de la couronne de perçage (34).

12. Outil de perçage selon la revendication 11, **caractérisé par le fait que** les configurations (64) d'engagement d'une clé comportent une ouverture marginale axiale et/ou radiale.

13. Outil de perçage selon la revendication 11 ou 12, **caractérisé par le fait que** les configurations (64) d'engagement d'une clé comportent des surfaces (68) de venue en butée d'une clé, orientées pour l'essentiel parallèlement à l'axe de rotation (24) et délimitées par un fond de pénétration (66).

14. Outil de perçage selon l'une des revendications 1 à 13, **caractérisé par le fait que** le corps de base (32) est pourvu d'au moins deux rainures (22) d'acheminement de copeaux, délimitées par des nervures (26) sur leurs flancs ; et **par le fait qu'**un canal respectif à agent de refroidissement est ménagé dans lesdites nervures (26) du corps de base (32) et présente, à l'extrémité dudit corps de base située côté couronne de perçage, un orifice de sortie (36) pratiqué à l'intérieure de l'une desdites rainures (22) d'acheminement de copeaux.

15. Outil de perçage selon la revendication 14, **caractérisé par le fait que** les orifices de sortie (36) forment une rigole à bords ouverts qui s'étend le long des rainures (22) d'acheminement de copeaux, ou débouchent dans une telle rigole, laquelle rigole fusionne dans une rigole respective située dans la couronne de perçage (34), et menant à l'un des tranchants principaux (16).
